# EUROPEAN PATENT SPECIFICATION

(11) **EP 0 503 607 B1**
(45) Date of publication and mention of the grant of the patent: **21.07.1999**
(21) Application number: 92104213.1
(22) Date of filing: 11.03.1992
(51) Int. Cl.: G11B 11/10

(54) **Magneto-optical recording medium**
Magneto-optisches Aufzeichnungsmedium
Milieu d'enregistrement magnéto-optique

(30) Priority: 14.03.1991 JP 10497591; 30.01.1992 JP 4027792
(43) Date of publication of application: 16.09.1992
(73) Proprietor: TDK Corporation, Chuo-ku, Tokyo-to 103 (JP)
(72) Inventor: Utsunomiya, Hajime , c/o TDK Corporation, Chuo-ku, Tokyo (JP)
(74) Representative: Vogeser, Werner, Dipl.-Ing.

(56) References cited:
- EP-A- 331 737
- EP-A- 0 045 183
- EP-A- 0 161 807
- EP-A- 0 192 256
- US-A- 4 680 742
- US-A- 4 861 656

## Description

This invention relates to magneto-optical recording media according to the preamble of claim 1.

### BACKGROUND OF THE INVENTION

Among optical recording media, magneto-optical recording media characterized by large information capacity have marked a noticeable advance. The magneto-optical recording media have a recording layer in the form of a magnetic film deposited on a transparent substrate through a dielectric layer. Recently, an attempt is made to provide a second dielectric layer on the recording layer such that the recording layer is interposed between a pair of dielectric layers and to provide a metal reflective layer on top of the laminate structure for increasing the output of playback signals.

Al and Al alloys are considered useful for the metal reflective layer from the standpoints of light reflectivity and cost. For example, US-A-4,717,628 discloses an Al-Ni alloy containing 2 to 10 atom% of Ni which is excellent in recording sensitivity and reproducing C/N. Japanese Patent Application Kokai JP-A- 2 292 753 discloses Al-Ta alloys, JP-A 2 285 533 discloses alloys of Al or the like with Re, and JP-A 2 267 752 discloses Al-Nb alloys.

Where such a metal reflective layer is stacked, the second dielectric layer interposed between the recording layer and the metal reflective layer is generally formed of nitrides such as silicon nitride and aluminum nitride. Among these nitrides, silicon nitride having an index of refraction of about 2 provides good enhancement effect when deposited under the metal reflective layer. However, both the metal reflective layer and the second dielectric layer of nitride have enough thermal conductivity to allow heat to dissipate from the recording layer, resulting in low recording sensitivity, especially low recording power threshold (Pth) at the onset of recording, which means inability to record with low recording power.

Optical recording requires not only a low recording power threshold, but also a low error rate in that the minimum recording power (Pmin) providing a byte error rate (BER) of up to 5x10⁻⁵ is low. The prior art laminate structures did not achieve a satisfactory minimum recording power (Pmin).

In general, the resolution between recording signals lowers as the recording power increases. Provided that Pmax is an upper limit of recording power at which the resolution between 3T and 8T signals at a certain rpm is lowered to 40% according to the ISO standard, § 24.1, it is desired that the recording power margin given as (Pmax - Pmin) be as wide as possible. There are many variations in the driving system. The recording laser power varies with a particular unit. Optical and detection systems are subject to variations. An individual operating system contains various variation factors including temperature variations and changes with time of laser power, changes with time of optical and detection systems, variations in tilt angle upon disk loading, scattering by dust, and recording/reproducing conditions. Interchangeability between drive systems of different types is also required. Therefore, in order to ensure stable recording/reproducing operation at all times irrespective of any variation factor in an individual operating system or between operating systems of the same type or between operating systems of different types, the recording power margin should be as wide as possible. Then, the drive system design has a higher degree of freedom and drive control becomes easy. Regretfully, the conventional disks have a rather narrow recording power margin.

From US-A-4,680,742 a magneto-optical recording element comprising a substrate, a magnetic layer and a dielectric layer is known whereby the dielectric layer is formed by the deposition of a composition comprising Si₃N₄ and a refractive index-improving agent such as Al₂O₃ or Y₂O₃. A reflective layer containing an aluminium alloy cannot be derived from said document.

EP-A-0 192 256 corresponding to the above mentioned US-A-4,717,628 discloses a magneto-optical recording medium comprising a substrate, a first transparent dielectric film, a recording layer, a second transparent dielectric film and a reflective film wherein the reflective film is composed of an aluminium-nickel alloy.

US-A-4,861,656 discloses a magneto-optical recording medium with a first dielectric layer, a recording layer and a second dielectric layer, whereby the dielectric layers are prepared of rare earth oxides, alone or from a mixture of the oxides and silicon oxide and silicon nitride.

From EP-A-0 331 737 a photo-magnetic recording medium comprising a substrate, a first dielectric film, a recording layer a second transparent dielectric film and a reflective film in said order is known. A specific reflective layer comprising an aluminium alloy containing nickel is not derivable.

### SUMMARY THE INVENTION

A primary object of the present invention is to widen the recording power margin of a magneto-optical recording medium for improving the recording sensitivity thereof and ensuring stable recording/reproducing performance.

According to the present invention, there is provided a magneto-optical recording medium comprising a first dielectric layer, a recording layer, a second dielectric layer, and a metal reflective layer stacked on a substrate in the described order. The second dielectric layer contains at least one oxide of a rare earth element inclusive of Y, silicon oxide, and silicon nitride. The rare earth element is La and/or Ce. The second dielectric layer contains about 5 to 50 mol% of the rare earth element oxide as calculated in stoichiometric composition and has an O/N atom ratio of from about 0.2 to 3. The second dielectric layer is about 5 to 50 nm thick. The metal reflective layer is of an aluminum base alloy containing 80 to 99% by weight of Al and up to 20% by weight of Ni. The metal reflective layer is about 40 to 150 nm (400 to 1,500 Å) thick.

### ADVANTAGES

The present invention is successful in significantly improving the recording sensitivity of a magneto-optical recording medium by using a second dielectric layer containing a rare earth element oxide ROx, silicon nitride SiNx, and silicon oxide SiOx. Among recording sensitivity factors, the recording power threshold (Pth) at the onset of recording is lowered. A lowering in recording power threshold (Pth) is believed due to the low thermal conductivity of the second dielectric layer which is effective in confining heat within the underlying recording layer even when the overlying metal reflective layer has a high thermal conductivity.

The present invention is also successful in significantly lowering the minimum recording power (Pmin) providing a byte error rate (BER) of up to 5x10⁻⁵ while ensuring a very wide recording power margin between Pmax, which is an upper limit of recording power providing a resolution of at least 40%, and Pmin.

The inventors proposed the first dielectric layer of a material containing ROx, SiNx, and SiOx as interposed between the substrate and the recording layer in JP-A 63161551, corresponding to US-A-4,861,656 and 2110843. Since these applications did not take into account the use of a metal reflective layer, significant improvements in sensitivity and recording margin due to the provision of a second dielectric layer of such material under the metal reflective layer are quite unexpected.

### BRIEF DESCRIPTION OF THE DRAWING

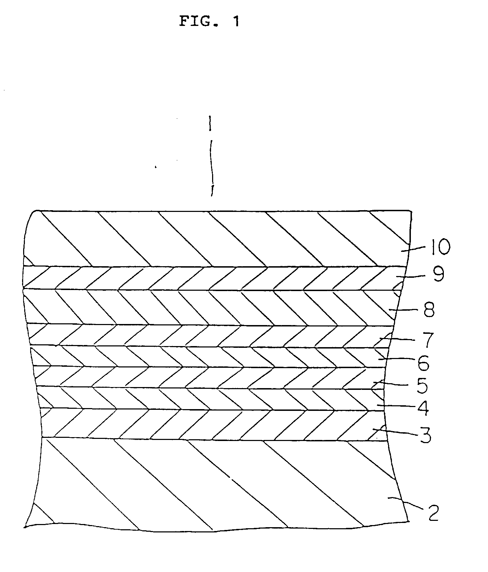

FIG. 1 is a schematic cross section of a magneto-optical recording medium according to one embodiment of the present invention.

### DESCRIPTION OF THE PREFERRED EMBODIMENT

Referring to FIG. 1, a magneto-optical recording medium 1 according to one preferred embodiment of the present invention is illustrated as including a protective layer 3, a first dielectric layer 4, a recording layer 5, a second dielectric layer 6, and a reflective layer 7 stacked on one major surface of a substrate 1 in the described order.

The second dielectric layer 6 is disposed on the recording layer 5 for improving the enhancement effect and corrosion resistance. The second dielectric layer 6 is comprised of at least one oxide of a rare earth element (inclusive of Y), silicon oxide, and silicon nitride in order to provide heat accumulation effect and sensitivity improvement therewith and to widen the recording power margin when the metal reflective layer 7 is disposed thereon.

The rare earth elements include Y, La through Sm, and Eu through Ln, alone or in admixture of two or more. Preferably, lanthanides inclusive of Y, especially at least one of La and Ce are contained. Typical oxides of La and Ce are La₂O₃ and CeO₂. They are of stoichiometric composition although some deviation therefrom is acceptable. Where La and/or Ce are contained, either one or both of La and Ce oxides may be present. Where both La and Ce oxides are contained, their mix ratio is not limited. In addition to the oxide of La and/or Ce, an oxide of another rare earth element such as Y and Er may be contained in an amount of up to about 10 atom% (calculated as metal) based on the total rare earth element oxides. Further, oxides of Fe, Mg, Ca, Sr, Ba, and Al may be contained, preferably up to 10 atom% for Fe and up to 10 atom% for the total of the remaining elements.

The second dielectric layer contains silicon oxide and silicon nitride in addition to the rare earth element oxide. Typically, silicon oxide and silicon nitride are present in the form of SiO₂, SiO and Si₃N₄. Some deviation from the stoichiometric composition is acceptable.

Preferably, the second dielectric layer of the above-mentioned composition has an index of refraction of about 1.8 to 3.0, more preferably from about 1.8 to 2.5 at a wavelength of 600 to 900 nm. An index of refraction of lower than 1.8 would lead to a low Kerr rotation angle effect and hence, low outputs whereas an index of refraction of higher than 3.0 would result in low outputs and increased noise.

The second dielectric layer preferably contains rare earth element oxide(s) and silicon compounds in such a ratio that the molar ratio of the total of rare earth element oxides to the total of silicon compounds and rare earth element oxides, calculated as stoichiometric composition, may range from about 0.05 to 0.5. In other words, the second dielectric layer preferably contains about 5 to 50 mol% of rare earth element oxide(s). If this ratio is below the lower limit, there result low outputs and poor durability in a hot humid environment. If this ratio is above the upper limit, there result increased noise and poor durability in a hot humid environment. The atomic ratio of rare earth element/Si ranges from about 0.03 to 0.6. The atomic ratio of O/N ranges from about 0.2 to 3. A lower O/N ratio would detract from durability in a hot humid environment whereas a higher O/N ratio would result in low outputs and degradation with time.

For the measurement of these atomic ratios, conventional analysis such as Auger spectroscopy and EDA may be used. The second dielectric layer may have a graded concentration of oxygen and nitrogen in a thickness direction.

The second dielectric layer is preferably formed by sputtering. The target used in sputtering is a sintered body of a mixture of a rare earth element oxide, preferably La₂O₃ and/or CeO₂, SiO₂, and Si₃N₄. Part or all of the rare earth element oxide, preferably La₂O₃ and CeO₂, may be replaced by pyrophoric alloy such as Auer Metal, Hueber Metal, Misch Metal, and Welsbach Metal.

Like sputtering, other gas phase deposition methods such as CVD, evaporation, and ion plating may be used. In the dielectric layer, Ar and N2 in the deposition atmosphere are often introduced as impurities. Also inclusion of Fe, Ni, Cr, Cu, Mn, Mg, Ca, Na and K as impurities is acceptable.

The second dielectric layer is about 5 to 50 nm (50 to 500 Å) thick. It is desired that the second dielectric layer be thin for increasing light transmittance and outputs. A choice of a low thermal conductivity material for the overlying reflective layer allows the second dielectric layer to be further reduced in thickness. With respect to the thickness of the second dielectric layer, noise would increase if it is too thin whereas outputs and C/N would be low if it is too thick.

The second dielectric layer of the above-mentioned nature has minimal internal stresses and is fully durable upon thermal cycling and effective for protecting the recording layer.

On the second dielectric layer 6 is disposed the metal reflective layer 7. The reflective layer is formed of specific Al alloys particularly when combined with the second dielectric layer because desired reflectivity, increased outputs, improved sensitivity, and a wide recording power margin expectable.

Used are Al alloys containing 80 to 99% by weight of Al and the balance being Ni. The Al alloys are more effective in widening the recording power margin as well as increasing C/N and recording sensitivity. Said Al-Ni alloys are consisting essentially of up to 20% by weight, especially 1 to 10% by weight of Ni and the balance of Al.

The reflective layer is about 40 to 150 nm (400 to 1,500 Å), preferably about 50 to 100 nm (500 to 1,000 Å) thick. The metal reflective layer becomes non-effective (output and C/N lowering) if it is too thin, and detracts from sensitivity if it is too thick.

The medium having the reflective layer stacked thereon exhibits a light reflectivity of at least about 15%. The reflective layer as such preferably has an index of refraction (the real part of a complex index of refraction) n of about 1.5 to 3.5 and a coefficient of extinction (the imaginary part of a complex index of refraction) k of about 2.5 to to 7.0.

The reflective layer of such an alloy can be formed by sputtering, evaporation or ion plating, preferably by sputtering a target of an alloy having the above-defined composition, typically Al-Ni alloy.

Below the reflective layer 7 and second dielectric layer 6 is disposed the recording layer 5 in which information is magnetically recorded by means of a modulated thermal beam or a modulated magnetic field and then reproduced through magneto-optical conversion.

The material of the recording layer is not critical insofar as magneto-optical recording is possible. Preferably, an alloy containing a rare earth metal, more preferably a rare earth metal and a transition metal is sputtered, evaporated or ion platted to form an amorphous film, with sputtering recommended. The rare earth metals used herein include Tb, Dy, Nd, Gd, Sm, and Ce, and mixtures thereof. The transition metals include Fe and Co. Preferably the alloy consists essentially of Fe and Co in a total content of 65 to 85 atom% and the balance of a rare earth metal or metals. The preferred recording layer has a composition: TbFeCo, DyTbFeCo, NdDyFeCo, NdGdFeCo, and the like. The recording layer may contain up to 10 atom% of an additional metal or metals selected from Cr, Al, Ti, Pt, Si, Mo, Mn, V, Ni, Cu, Zn, Ge, and Au. Also, the recording layer may contain up to 10 atom% of another rare earth metal or metals selected from Sc, Y, La, Ce, Pr, Pm, Sm, Eu, Ho, Er, Tm, Yb, and Lu. The recording layer generally has a thickness of about 10 to about 1,000 nm.

Below the recording layer 5 is disposed the first dielectric layer 4. The first dielectric layer may have an identical or different composition than the second dielectric layer. Preferably, the first dielectric layer is formed of dielectric materials, for example, oxides, carbides, nitrides, and sulfides such as SiO₂, SiO, AlN, Al₂O₃, Si₃N₄, ZnS, BN, TiO₂, and TiN, and mixtures thereof to a thickness of about 50 to 200 nm (500 to 2,000 Å). The deposition method is the same as explained for the second dielectric layer.

Between the substrate 2 and the first dielectric layer 4 is preferably disposed the protective layer 3 which may be formed of glass, for example, borosilicate glass, barium borosilicate glass, and aluminum borosilicate glass, optionally containing Si₃N₄. Preferred are glasses of borosilicate, barium borosilicate, and aluminum borosilicate types containing 40 to 80% by weight of SiO₂, part of which may be replaced by Si₃N₄. The protective layer may be formed by sputtering to a thickness of about 30 to 150 nm (300 to 1,500 Å).

The substrate 2 used herein should be substantially transparent to recording and reproducing light, typically semiconductor laser light having a wavelength of about 600 to 900 nm, often about 700 to 800 nm, most often 780 nm. A light transmittance of at least 80% is preferred. This permits recording/reproducing operation from the rear surface of the substrate.

The substrate is generally formed of a resin which is preferably selected from thermoplastic resins such as polycarbonate resins, acrylic resins and amorphous polyolefin resins. If desired, the substrate may be formed with an oxygen-impermeable coating on its outer surface and outer periphery surface. Further, the substrate on the recording layer-bearing surface may be provided with tracking grooves.

Additionally, a protective coat 8 is preferably provided on the reflective layer 7 as shown in FIG. 1. It may be formed from various resinous materials, typically UV-curable resins to a thickness of about 0.1 to 100 µm. Although the protective coat 8 may be a deposited layer or a preformed sheet, it is preferably formed by coating a composition of a radiation-curable compound (e.g., acrylate) and a photopolymerization sensitizer and curing the coating with radiation.

A protective plate 10 may be disposed on the protective coat 8 through an adhesive layer 9 if necessary. The protective plate 10 may be formed of various resins or inorganic materials such as glass and ceramics. The provision of protective coat 8 and protective plate 10 contributes to further improvements in the durability and corrosion resistance of the magneto-optical recording medium.

Instead of using the protective plate 10, two sets each having a series of layers 3 to 8 on a substrate 2 may be joined together via an adhesive layer such that the recording layers are internally opposed to each other. This results in a medium of the double side recording type in which writing is carried out from the outside surfaces of opposed substrates. The substrate 2 and protective plate 10 on their rear or outside surface are preferably coated with a protective coating, which may be of a similar material to those described for the protective coat 8.

### EXAMPLE

Examples of the present invention are given below by way of illustration and not by way of limitation.

### Example 1

Polycarbonate was injection molded into a substrate having a diameter of 86 mm and a thickness of 1.2 mm. On the substrate, a first dielectric layer of SiNx (x = 1.1) was deposited by RF magnetron sputtering to a thickness of 90 nm (900 Å). On the first dielectric layer, a recording layer of Tb20Fe74Co6 was deposited by sputtering to a thickness of 20 nm (200 Å).

On the recording layer, a second dielectric layer consisting of 30 mol% of La₂O₃, 20 mol% of SiO₂ and 50 mol% of Si₃N₄ (designated LaSiON I) was deposited by RF magnetron sputtering. The second dielectric layer had a thickness of 20 nm (200 Å), an index of refraction of 2.0, and an atomic ratio of rare earth element to silicon (R/Si) of 0.35.

On the second dielectric layer, a reflective layer was deposited by RF magnetron sputtering to a thickness of 80 nm (800 Å). The reflective layer was formed of an Al-Ni alloy consisting of 6% by weight of Ni and the balance of Al.

On the reflective layer, a protective coat was formed by applying a UV curable resin containing an oligoester acrylate followed by UV curing to a thickness of 5 µm. In this way, a magneto-optical recording disk sample was completed.

It is to be noted that the coating composition was determined by Auger spectroscopy.

The disk sample was measured for reflectivity, recording sensitivity, and C/N ratio.

### (1) Reflectivity

Reflectivity at 830 nm was measured by means of a magneto-optical recording disk tester by irradiating a semiconductor laser beam having a wavelength of 830 nm. The reflectivity was 20.9%.

### (2) Recording sensitivity

While rotating the disk at 1,800 rpm and applying a magnetic field of 15.92 kA/m (200 Oe), recording was done on the disk at a radius of 30 mm using a light pulse at 3.7 MHz and a duty ratio of 33%. The power (Pth) at the onset of recording was measured. The result is shown in Table 1.

### (3) C/N

C/N was measured under the following conditions.

| | |
|---|---|
| Linear velocity | 1,800 rpm |
| Carrier frequency | 3.7 MHz |
| Resolution | 30 kHz |
| Video band width | 1 kHz |
| Recording power (830 nm) | 6.5 mW |
| Reproducing power (830 nm) | 1.5 mW |

The C/N was 47.0 dB.

The sample has a good corrosion resistance.

### Example 2

A magneto-optical recording disk sample was fabricated by the same procedure as in Example 1 except that instead of LaSiON I, the second dielectric layer was formed of a composition consisting of 20 mol% of La₂O₃, 30 mol% of SiO₂ and 50 mol% of Si₃N₄ (designated LaSiON III). The second dielectric layer had a thickness of 20 nm (200 Å), an index of refraction of 2.0, and an atomic R/Si ratio of 0.22. The disk had a reflectivity of 21.0%, a C/N ratio of 47.0 dB and good corrosion resistance.

### Example 3

A magneto-optical recording disk sample was fabricated by the same procedure as in Example 1 except that the second dielectric layer consisted of 20 mol % CeO₂, 30 mol% of SiO₂ and 50 mol% of Si₃N₄. The disk had a reflectivity of 20.7%, a C/N ratio of 47.0 dB and good corrosion resistance.

### Comparative Example 1

A magneto-optical recording disk sample was fabricated by the same procedure as in Example 1 except that the second dielectric layer was of SiNx (x = 1.1).

### Example 4

A magneto-optical recording disk sample was fabricated by the same procedure as in Example 1 except that the second dielectric layer had a thickness of 50 nm (500Å). The disk had a reflectivity of 19.0%, a C/N ratio of 46.5 dB and good corrosion resistance.

### Comparative Example 2

A magneto-optical recording disk sample was fabricated by the same procedure as in Example 4 except that the second dielectric layer was of SiNx (x = 1.1).

The recording sensitivity measurements of Examples are shown in Table 1.

**Table 1**

| Example | Second dielectric layer | | Reflective layer | Sensitivity Pth (mW) |
|---|---|---|---|---|
| | Composition | Thickness (Å)* | | |
| E1 | LaSiON I | 200 | Al-Ni | 3.6 |
| E2 | LaSiON III | 200 | Al-Ni | 3.6 |
| E3 | CeSiON | 200 | Al-Ni | 3.6 |
| CE1 | SiNx | 200 | Al-Ni | 4.5 |
| E4 | LaSiON I | 500 | Al-Ni | 2.8 |
| CE2 | SiNx | 500 | Al-Ni | 3.6 |

| | | | | |
|---|---|---|---|---|
| * 10Å = 1 nm | | | | |

As seen from Table 1, the disk samples of Examples show significantly higher sensitivity (Pth) than the comparative samples.

Next, the disk samples were examined for the minimum recording power and recording power margin.

### (4) Minimum recording power (Pmin)

The byte error rate (BER) was measured under the following conditions.

| | |
|---|---|
| Disk rotation | 1800, 2400, 3600 rpm |
| Recording signal | B3 pattern |
| Measurement site | 0 to 300 tracks |
| Recording magnetic field | 15.92 kA/m (200 Oe) |
| Laser wavelength | 780 nm |

While the recording power was increased from 1.5 mW, the minimum recording power Pmin (mW) at which BER was reduced to below 5.0x10⁻⁵ was measured.

### (5) Recording power margin

Resolution was measured under the following conditions.

| | |
|---|---|
| Disk rotation | 1800, 2400, 3600 rpm |
| Recording signal | 3T, 8T |
| Measurement site | radius 24 mm |
| Recording magnetic field | 31.84 kA/m (400 Oe) |
| Laser wavelength | 825 nm |

While the recording power was increased from 1.5 mW, the maximum recording power Pmax (mW) which maintained a resolution of at least 40% was measured. The recording power margin was (Pmax - Pmin) expressed in mW.

The results are shown in Table 2.

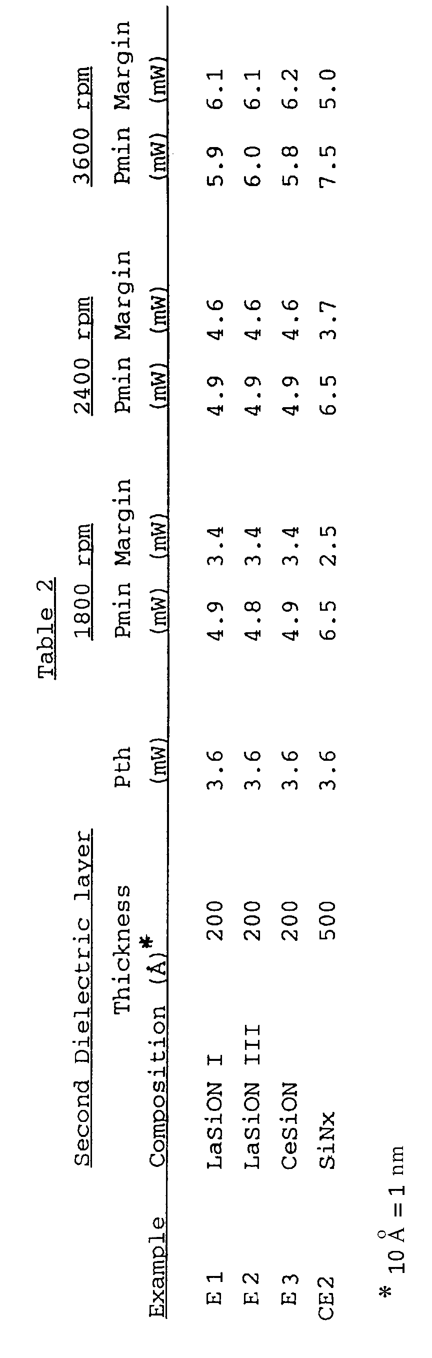

As is evident from Table 2, for a disk structure having the same metal reflective layer and designed to have the same Pth, the use of a second dielectric layer within the scope of the invention allows the dielectric layer be reduced in thickness and achieves a significant lowering of the minimum recording power Pmin at which stable recording with a low error rate (BER ≤ 5.0x10⁻⁵) and a high resolution (≥ 40%) is carried out, thus resulting in a wide recording power margin.

There has been described a magneto-optical recording medium including a dielectric layer of a mixture of ROx, SiOx and SiNx between the recording layer and a metal reflective layer whereby the medium has very high recording sensitivity and a wide recording power margin.

While the invention has been described in what is presently considered to be a preferred embodiment, other variations and modifications will become apparent to those skilled in the art. It is intended, therefore, that the invention not be limited to the illustrative embodiments, but be interpreted within scope of the appended claims.

## Claims

1. A magneto-optical recording medium (1) comprising a first dielectric layer (4) consisting essentially of silicon nitride, a recording layer (5), a second dielectric layer (6) comprising at least one oxide of La and Ce, silicon oxide and silicon nitride, and a metal reflective layer (7) stacked on a substrate (2) in the described order,
**characterized in that** the
- said second dielectric layer (6) is about 5 to 50 nm thick,
- said metal reflective layer (7) being of an aluminium alloy containing 80 to 99% by weight of Al and up to 20% by weight of Ni, and having a thickness of about 40 to 150 nm.

2. The magneto-optical recording medium (1) of claim 1, wherein said dielectric layer (6) contains about 5 to 50 mole-% of the La and/or Ce oxide as calculated stoichiometrically and has an O/N atom ratio of from about 0.2 to 3.

3. The magneto-optical recording medium (1) of claim 1 or 2, wherein the recording medium (1) has a disk shape and is rotatable at 1800 to 3600 rpm for recording and reproducing.

## Patentansprüche

1. Magnetooptisches Aufzeichnungsmedium (1) mit einer ersten im wesentlichen aus Siliciumnitrid bestehenden dielektrischen Schicht (4), einer Aufzeichnungsschicht (5), einer zweiten zumindest ein Oxid aus La und Ce, Siliciumoxid und Siliciumnitrid bestehenden zweiten dielektrischen Schicht (6) und einer metallischen Reflexionsschicht (7) auf dem Substrat (2) in der angegebenen Reihenfolge,
**dadurch gekennzeichnet, daß**
- die zweite dielektrische Schicht (6) etwa 5 bis 50 nm dick ist,
- die metallische Reflexionsschicht (7) aus einer 80 bis 99 Gew.-% Al und bis zu 20 Gew.-% Ni enthaltenden Aluminiumlegierung besteht und eine Dicke von etwa 40 bis 150 nm hat.

2. Magnetooptisches Aufzeichnungsmedium (1) nach Anspruch 1, worin die dielektrische Schicht (6) etwa 5 bis 50 Mol-% stöchiometrisch berechnetes Laund/oder Ce-Oxid enthält und ein O/N-Atomverhältnis von etwa 0,2 bis 3 hat.

3. Magnetooptisches Aufzeichnungsmedium (1) nach Anspruch 1 oder 2, worin das Aufzeichnungsmedium (1) eine Disk-Form hat und bei 1800 bis 3600 rpm zum Aufzeichnen und Wiedergeben drehbar ist.

## Revendications

1. Support d'enregistrement magnéto-optique (1) comprenant une première couche diélectrique (4) constituée essentiellement de nitrure de silicium, et une couche d'enregistrement (5), une seconde couche diélectrique (6) comprenant au moins un oxyde de La et de Ce, de l'oxyde de silicium et du nitrure de silicium, et une couche métallique réfléchissante (7) empilée sur un substrat (2), dans l'ordre décrit,
caractérisé en ce que
- ladite seconde couche diélectrique (6) possède une épaisseur comprise entre environ 5 et 50 nm,
- ladite couche métallique réfléchissante (7) étant formée d'un alliage d'aluminium contenant 80 à 99 % en poids de Al et jusqu'à 20 % en poids de Ni et possédant une épaisseur d'environ 40 à 150 nm.

2. Support d'enregistrement magnéto-optique (1) selon la revendication 1, dans lequel ladite couche diélectrique (6) contient environ 5 à 50 % en moles de l'oxyde de La et/ou Ce calculés d'une manière stoechiométrique et possède un rapport atomique O/N entre environ 0,2 et 3.

3. Support d'enregistrement magnéto-optique (1) selon la revendication 1 ou 2, dans lequel le support d'enregistrement (1) possède une forme de disque et peut tourner entre 1800 et 3600 tr/mn pour l'enregistrement et la reproduction.
